# EUROPÄISCHE PATENTSCHRIFT

(11) **EP 2 626 389 B1**
(45) Veröffentlichungstag und Bekanntmachung des Hinweises auf die Patenterteilung: **20.07.2016**
(21) Anmeldenummer: 13154651.7
(22) Anmeldetag: 08.02.2013
(51) Int. Cl.: C09D 5/00

(54) **BESCHICHTUNGSPRODUKT UND VERFAHREN ZUM BESCHICHTEN EINES SUBSTRATS**
COATING PRODUCT AND METHOD FOR COATING A SUBSTRATE
PRODUIT DE REVÊTEMENT TOUT COMME PROCÉDÉ DE REVÊTEMENT D'UN SUBSTRAT

(30) Priorität: 09.02.2012 DE 102012002575
(43) Veröffentlichungstag der Anmeldung: 14.08.2013
(73) Patentinhaber: Future Carbon GmbH, 95448 Bayreuth (DE)
(72) Erfinder: Forero, Dr., Stefan, 95446 Weidenberg (DE)
(74) Vertreter: Müller, Christian Stefan Gerd

(56) Entgegenhaltungen:
- EP-A1- 2 159 267
- US-A1- 2006 062 981

## Beschreibung

Die vorliegende Erfindung betrifft zunächst ein Beschichtungsprodukt gemäß dem Oberbegriff von Patentanspruch 1. Weiterhin betrifft die Erfindung auch ein Verfahren zum Beschichten eines Substrats mit einem Beschichtungsprodukt.

Beschichtungsprodukte sind auf unterschiedlichste Weise und für unterschiedlichste Zwecke im Stand der Technik bekannt. Beispielsweise beschreibt die EP 2 159 267 A1 ein Anstrichmittel zur Herstellung einer Flächenheizung, wobei das Anstrichmittel kristallines Graphit enthält. Die US 2006/0062981 A1 offenbart eine Beschichtungsanordnung von 1 bis 100 Paaren an alternierenden Antifouling- und leitfähigen Schichten, die zur Anwendung auf ein Substrat geeignet ist, das in entweder Wasser, Meerwasser, Fluss- oder Seewasser eingetaucht werden soll. Beschichtungsprodukte dienen generell dazu, dass Substrate damit beschichtet werden können.

Beschichtungsprodukte können beispielsweise flüssig ausgebildet sein. In einem solchen Fall können die Beschichtungsprodukte eine Trägerflüssigkeit aufweisen. In der Trägerflüssigkeit können sich zudem Materialkomponenten befinden, wobei derartige Materialkomponenten als zueinander unterschiedliche Materialphasen ausgebildet sein können.

In der Regel wird bei derartigen Beschichtungsprodukten ein hoher Grad an Homogenität gefordert. Die Separierung von im Beschichtungsprodukt befindlichen Materialkomponenten, beispielsweise während der Lagerung, des Aufbringens, der Trocknung, der Vernetzung und dergleichen ist in der Regel unerwünscht.

Bekannt sind allgemein bereits Beschichtungsprodukte, die nach einer Applikation, etwa dem Aufbringen auf einem Substrat, mindestens zwei voneinander getrennte Materialphasen aufweisen. Dabei kann sich eine Materialphase am Substrat befinden und von der anderen Materialphase bedeckt werden. Die erste, untere Materialphase kann dabei jeweils eine Grenzfläche zum Substrat und zu der sich darauf befindlichen oberen Materialphase bilden.

Beschichtungsprodukte der eingangs genannten Art sind in der Vergangenheit beispielsweise im Zusammenhang mit Haftgrundierungen beziehungsweise Korrosionsschutzgrundierungen bei Beschichtungen bekannt geworden.

Aufgabe der vorliegenden Erfindung ist es, weitere Anwendungsmöglichkeiten für solche Beschichtungsprodukte zu erschließen.

Dies wird erfindungsgemäß erreicht durch das Beschichtungsprodukt mit den Merkmalen gemäß dem unabhängigen Patentanspruch 1, sowie das Beschichtungsverfahren mit den Merkmalen gemäß dem unabhängigen Patentanspruch 9. Weitere Merkmale und Details der Erfindung ergeben sich aus den Unteransprüchen, der Beschreibung sowie den Zeichnungen. Dabei gelten Merkmale und Details, die im Zusammenhang mit dem Beschichtungsprodukt beschrieben sind, selbstverständlich vollumfänglich auch im Zusammenhang mit dem Beschichtungsverfahren, und umgekehrt, so dass das bezüglich des Beschichtungsprodukts Gesagte im vollen Umfang auch im Zusammenhang mit dem Beschichtungsverfahren als offenbart gilt, und umgekehrt.

Der Grundgedanke der vorliegenden Erfindung besteht darin, Beschichtungsprodukte nunmehr auch im Zusammenhang mit leitfähigen Materialien zu realisieren.

Gemäß dem ersten Aspekt der Erfindung wird ein Beschichtungsprodukt bereitgestellt, mit einer Trägerflüssigkeit und wenigstens zwei in der Trägerflüssigkeit befindlichen Materialkomponenten, die als zueinander unterschiedliche Materialphasen ausgebildet sind, wobei wenigstens eine Materialphase als thermisch und/oder elektrisch leitfähige Materialphase ausgebildet ist, wenigstens eine Materialphase ein Isoliermaterial aufweist und die zueinander unterschiedlichen Materialphasen als voneinander trennbare Materialphasen ausgebildet sind.

Die vorliegende Erfindung ist auf ein Beschichtungsprodukt gerichtet. Generell handelt es sich dabei um ein Produkt, beispielsweise ein Material, das zur Beschichtung eines Substrats geeignet ist. Dabei ist die Erfindung nicht auf bestimmte Arten von Beschichtungsprodukten beschränkt. Bei einem Beschichtungsprodukt handelt es sich insbesondere um eine Gesamtheit von Elementen, die in bestimmter weise aufeinander bezogen sind und/oder die in einer bestimmten Weise miteinander in Wechselwirkung stehen. Diese Elemente bilden insbesondere eine Einheit.

Erfindungsgemäß weist das Beschichtungsprodukt zunächst eine Trägerflüssigkeit auf. Die Erfindung ist nicht auf bestimmte Trägerflüssigkeiten beschränkt. Einige vorteilhafte, jedoch nicht ausschließliche Beispiele für Trägerflüssigkeiten werden im weiteren Verlauf der Beschreibung näher erläutert. Bei einer Trägerflüssigkeit im Lichte der vorliegenden Erfindung handelt es sich insbesondere um eine Flüssigkeit, in der sich weitere Materialkomponenten befinden.

Vorgesehen ist, dass sich in der Trägerflüssigkeit wenigstens zwei Materialkomponenten befinden. Diese Materialkomponenten sind als zueinander unterschiedliche Materialphasen ausgebildet. Natürlich können auch mehr Materialkomponenten, beispielsweise drei oder mehr Materialkomponenten, vorgesehen sein. Auch kann es sich bei der Trägerflüssigkeit selbst um eine der Material komponenten handeln. Die Materialphasen befinden sich zumindest zeitweilig in der Trägerflüssigkeit, oder sie sind zumindest zeitweilig flüssig oder dispers.

Bei einer Materialphase handelt es sich um eine Phase aus einem bestimmten Material. Materialphasen können beispielsweise Feststoffe, Pigmente, Bindemittel, Lösemittel, Additive und dergleichen sein. Bei einer Materialphase kann es sich beispielsweise um einen Füllstoff handeln.

Eine Phase ist insbesondere ein hinsichtlich seiner Eigenschaften, beispielsweise hinsichtlich physikalischer Eigenschaften, homogener Bereich. Eine Phase ist insbesondere ein Bereich, in dem die bestimmenden physikalischen und/oder chemischen Parameter, und/oder die chemische Zusammensatzung des Materials homogen, das heißt konstant und einheitlich sind.

Eine Materialphase wiederum kann aus einem Material, aber auch aus verschiedenen Materialien bestehen.

Beispielsweise kann vorgesehen sein, dass eine Materialphase ein Matrixmaterial aufweist, in welchem sich Additive befinden. Beispielsweise kann das Matrixmaterial mit den Additiven gefüllt sein. Die Erfindung ist nicht auf bestimmte Typen oder Arten von Additiven beschränkt. Vorteilhafte, jedoch nicht ausschließliche Beispiele werden im weiteren Verlauf der Beschreibung näher erläutert. Natürlich ist auch denkbar, dass die Materialphasen nur aus diesen Additiven bestehen. Bei den Additiven handelt es sich beispielsweise um die weiter unten genannten Pigmente.

Die Materialphasen befinden sich gemäß einer ersten Alternative zumindest zeitweilig in der Trägerflüssigkeit. "Zumindest zeitweilig" bedeutet insbesondere, dass die Trägerflüssigkeit nicht immer vorhanden sein muss. Beispielsweise kann die Trägerflüssigkeit während eines Trocknungsvorgangs verschwinden, so dass dann am Ende nur noch die Materialphasen in fester Form übrig bleiben.

Gemäß einer anderen Alternative sind die Materialphasen zumindest zeitweilig flüssig oder dispers. "Dispers" heißt in diesem Fall insbesondere, dass die entsprechende Materialphase in Lösung fein verteilt ist. Die Materialphasen müssen sich somit nicht in einer Flüssigkeit befinden, sondern können auch selbst flüssig beziehungsweise dispers sein. Beispielsweise könnte dies durch einen Thermoplasten mit einer Füllung, beispielsweise einer Kohlenstofffüllung, realisiert werden, wobei die Erfindung natürlich nicht auf dieses spezielle Beispiel beschränkt ist. "Zumindest zeitweilig" bedeutet insbesondere, dass der flüssige oder disperse Zustand nicht immer vorhanden sein muss. Beispielsweise kann sich der flüssige oder disperse Zustand während eines Trocknungsvorgangs ändern, so dass dann am Ende nur noch die Materialphasen in fester Form übrig bleiben.

Erfindungsgemäß ist vorgesehen, dass wenigstens eine Materialphase thermisch und/oder elektrisch leitfähig ausgebildet ist. Dadurch lassen sich insbesondere heizbare Systeme realisieren. Weiterhin ist erfindungsgemäß vorgesehen, dass wenigstens eine Materialphase ein Isoliermaterial aufweist.

Erfindungsgemäß ist weiterhin vorgesehen, dass die zueinander unterschiedlichen Materialphasen als voneinander trennbare Materialphasen ausgebildet sind. Das heißt, dass die wenigstens zwei unterschiedlichen Materialphasen zur Phasentrennung ausgebildet sind. Phasentrennung bedeutet, dass die Materialphasen voneinander getrennt werden. Phasentrennung bedeutet in diesem Zusammenhang insbesondere, dass eine Entmischung der Materialphasen eintritt oder möglich ist. Nach der Phasentrennung liegen die einzelnen Phasen über Grenzflächen aneinander an. Nach der Phasentrennung der Materialphasen können somit Schichten mit jeweils einer Materialphase entstehen.

Von der Phasentrennung der Materialphasen zu unterscheiden ist die Sedimentation, bei der sich Teilchen in einer Flüssigkeit durch die Schwerkraft ablagern oder absetzen.

Die Materialphasen sind insbesondere als voneinander trennbare Funktions-Materialphasen ausgebildet. Dabei ist bevorzugt vorgesehen, dass jeder Materialphase eine bestimmte Funktion zugeordnet ist, beispielsweise eine Leitungsfunktion, eine Isolierfunktion, oder dergleichen. Nach der Phasentrennung sind dann auch die jeweiligen Funktionen getrennt. Wie dies im Einzelnen realisiert werden kann, wird im weiteren Verlauf der Beschreibung näher erläutert.

Der Mechanismus der Phasentrennung kann auf unterschiedliche Weise erfolgen, beispielsweise durch die Triebkraft unterschiedlicher Oberflächenspannungen, unterschiedliche Benetzungseigenschaften, unterschiedliche Filmkontraktion beim Trocknen und/oder Vernetzen, oder dergleichen.

Ein erfindungsgemäßes Beschichtungsprodukt kann beispielsweise als Mehrkomponentensystem auf ein Substrat aufgebracht werden. Durch bestimmte Einflüsse, beispielsweise die Zeit, äußere Einflüsse, wobei die Schwerkraft hier nicht gemeint ist, und/oder innere Einflüsse, und dergleichen trennt sich das Mehrkomponentensystem dann in verschiedene Materialphasen, beispielsweise Funktions-Materialphasen. Als wichtiger Vorteil erweist sich dabei die Möglichkeit einer einmaligen Applikation von mehreren Materialphasen, beispielsweise mehreren Funktionsschichten, in einem einzigen Arbeitsgang auf einem Substrat.

In einer weiteren Ausgestaltung ist vorgesehen, dass die wenigstens zwei Materialphasen im getrockneten und/oder gehärteten Zustand des Beschichtungsprodukts voneinander getrennt sind. In dieser Situation liegen die Materialphasen bevorzugt in Form unterschiedlicher Schichten, insbesondere unterschiedlicher Funktionsschichten, vor.

Durch die erfindungsgemäße Ausgestaltung des Beschichtungsprodukts wird es möglich, dieses auch auf leitfähige Materialien zu übertragen. Beispielsweise kann damit vorgesehen sein, dass das Beschichtungsprodukt als Heizung ausgebildet ist, wobei das Beschichtungsprodukt insbesondere auf ein - insbesondere zu beheizendes - Substrat aufgebracht wird. Beispielsweise kann ein solches Beschichtungsprodukt auf einem Metallsubstrat aufgebracht werden.

Bei einem Substrat handelt es sich im Lichte der vorliegenden Erfindung insbesondere um eine Auflage, etwa eine Unterlage oder Grundlage für etwas anderes, beispielsweise für das Beschichtungsprodukt. Die Erfindung ist nicht auf bestimmte Substrate oder Substratmaterialien beschränkt.

Gemäß der vorliegenden Erfindung wird folglich ein Beschichtungsprodukt, etwa eine Beschichtung oder ein Beschichtungsmaterial, insbesondere ein multifunktionelle Beschichtung oder ein multifunktionelles Beschichtungsmaterial, bereitgestellt.

Bei einer Beschichtung handelt es sich insbesondere um eine fest haftende Schicht aus formlosem Stoff auf einem Substrat, beispielsweise auf der Oberfläche eines Werkstücks. Eine solche Beschichtung kann beispielsweise zunächst in flüssiger Form vorliegen, wobei in dieser Flüssigkeit dann die wenigstens zwei Materialphasen vorhanden sind. Im weiteren Verlauf kann die Beschichtung dann trocknen und fest werden. Bei einer solchen Beschichtung kann es sich beispielsweise um einen Lack, eine Paste oder dergleichen handeln. Bei einem Beschichtungsmaterial handelt es sich grundsätzlich um ein Material, das zur Erzeugung einer Beschichtung verwendet wird.

Beispielsweise kann vorgesehen sein, dass das Beschichtungsprodukt aus zwei Materialphasen, die sich in einem Lösemittel befinden, gebildet ist.

Bevorzugt ist vorgesehen, dass das Beschichtungsprodukt als multifunktionelles Beschichtungsprodukt ausgebildet ist. Das heißt, dass das Beschichtungsprodukt mehrere Funktionen übernehmen kann. Beispielsweise kann vorgesehen sein, dass nach der Phasentrennung über eine Materialphase eine Schicht mit Heizfunktion erzeugt werden oder entstehen kann. Über eine andere Materialphase kann beispielsweise eine Schicht mit Isolierfunktion erzeugt werden oder entstehen. Zusätzlich ist es möglich, dass über eine Materialphase beispielsweise eine Schicht mit Schutzfunktion erzeugt werden oder entstehen kann. Weitere Funktionen werden im weiteren Verlauf der Beschreibung weiter unten erläutert.

Bevorzugt sind die Materialphasen als pigmentierte Materialphasen ausgebildet. Das bedeutet, dass das Beschichtungsprodukt Pigmente aufweist oder mit Pigmenten versehen ist. Bei einem Pigment handelt es sich insbesondere um eine Substanz, die insbesondere in einem Medium, beispielsweise einer Flüssigkeit, unlöslich ist. Bei dem Medium handelt es sich um den Stoff, in dem die Pigmente eingearbeitet sind. Bevorzugt kann vorgesehen sein, dass sich die Pigmente nach der Phasentrennung in einer Materialphase befinden, die substratnah ausgebildet ist. Auf diese Weise können die Pigmente von äußeren Einflüssen geschützt werden.

Bevorzugt ist weiterhin, wenn das Beschichtungsprodukt als Dispersion ausgebildet ist, und die zueinander unterschiedlichen Materialphasen in der Trägerflüssigkeit verteilt sind. Dabei kann auch vorgesehen sein, dass eine der Materialphasen die Trägerflüssigkeit selbst ist. Bei einer Dispersion handelt es sich insbesondere um ein Gemenge von Stoffen, die sich nicht oder kaum ineinander lösen.

Die vorliegende Erfindung ist nicht auf bestimmte Arten von Trägerflüssigkeiten beschränkt. Bevorzugt kann die Trägerflüssigkeit als wässrige Flüssigkeit und/oder als lösemittelhaltige Flüssigkeit und/oder als Lösemittel und/oder als bindemittelhaltige Flüssigkeit und/oder als Bindemittel ausgebildet sein.

Bevorzugt kann wenigstens eine Materialphase als Kunststoffmaterial oder als kunststoffhaltiges Material ausgebildet sein, oder ein solches Material aufweisen. Dabei ist die Erfindung nicht auf bestimmte Materialien beschränkt. Beispielswiese kann es sich bei dem Kunststoff um ein Polymer handeln.

Bevorzugt ist ferner, wenn die thermisch und/oder elektrisch leitfähige Materialphase ein Kohlenstoffmaterial oder kohlenstoffhaltiges Material aufweist, oder wenn die thermisch und/oder elektrisch leitfähige Materialphase als Kohlenstoffmaterial oder kohlenstoffhaltiges Material ausgebildet ist. Natürlich kann die leitfähige Materialphase auch andere Materialien enthalten.

Bevorzugt handelt es sich bei der leitfähigen Materialphase um eine elektrisch und/oder thermisch leitfähige Komponente, insbesondere um eine elektrisch und/oder thermisch leitfähige Zubereitung. Bei einer leitfähigen Komponente handelt es sich insbesondere um eine Komponente, die über ein Matrixmaterial, beispielsweise ein Kunststoffmaterial, verfügt, in dem sich ein oder mehrere Leitfähigkeitsadditive befinden. Die Leitfähigkeitsadditive können beispielsweise auf Kohlenstoffbasis ausgebildet sein. Bei solchen Leitfähigkeitsadditiven kann es sich beispielsweise um Graphit und/oder Kohlenstoff-Nanomaterialien und/oder Ruß, und dergleichen handeln. Eine leitfähige Komponente hat insbesondere den Vorteil, dass diese besonders schnell erhitzt und wieder abgekühlt werden kann, und zwar insbesondere aufgrund eines hohen Stroms und einer vernachlässigbaren thermischen Masse.

Bevorzugt ist vorgesehen, dass die leitfähige Materialphase elektrisch leitend ausgebildet ist. Eine derartige Materialphase ist durch die Verwendung des wenigstens einen Leitfähigkeitsadditivs bevorzugt niederohmig, was zu einer guten elektrischen Leitfähigkeit führt, da beispielsweise nur ein geringer elektrischer Widerstand vorhanden ist. Dadurch kann eine homogene Beheizbarkeit realisiert werden. Durch die Niederohmigkeit ist zudem gewährleistet, dass an die leitfähige Materialphase nur geringe Spannungen angelegt werden müssen, um eine gute Beheizung zu erreichen. Gleichwohl kann die Erfindung auch bei höheren Spannungen, beispielsweise Netzspannungen, verwendet werden.

Bevorzugt ist die leitfähige Materialphase als Kohlenstoffmaterial oder kohlenstoffhaltiges Material ausgebildet. Beispielsweise ist vorgesehen, dass die leitfähige Materialphase auf Basis von Kohlenstoffmaterialien und/oder Kohlenstoff-Makromaterialien und/oder Kohlenstoff-Nanomaterialien ausgebildet ist. Auch ist es denkbar dass eine irgendwie geartete Zusammensetzung aus Kohlenstoffmaterialien mit Kohlenstoff-Nanomaterialien zum Einsatz kommt.

Bevorzugt kann die leitfähige Materialphase zur Ausbildung einer leitfähigen Schicht, insbesondere einer Heizschicht nach der Phasentrennung ausgebildet sein.

Weiterhin ist erfindungsgemäß vorgesehen, dass eine Materialphase ein Isoliermaterial aufweist, was die Ausbildung einer Isolierschicht nach der Phasentrennung ermöglichen kann. Dabei kann insbesondere eine thermische und/oder elektrische Isolierung und/oder eine mechanische Isolierung und/oder eine chemische Isolierung realisiert werden. Es sind natürlich auch beliebige Kombinationen der genannten Isolierungstypen möglich. Auch ist die Erfindung nicht auf die genannten Isolierungstypen beschränkt.

Bevorzugt ist ferner, dass das erfindungsgemäße Beschichtungsprodukt eine weitere Materialphase aufweist, die ein Schutzmaterial aufweist oder zur Ausbildung einer Schutzschicht nach der Phasentrennung ausgebildet ist. Hierbei kann es sich beispielsweise um einen Schutz vor äußeren Einflüssen wie Witterungseinflüssen, um einen Schutz vor Beschädigungen und dergleichen handeln. Beispielsweise kann das Schutzmaterial derart ausgebildet sein, dass es besonders widerstandsfähig gegenüber bestimmten äußeren Einflüssen ist, dass es besonders hart ist, und dergleichen.

In bevorzugter Ausgestaltung kann das Beschichtungsprodukt zur Herstellung eines Heizmaterials oder einer Heizeinrichtung oder eines Bestandteils einer Heizeinrichtung verwendet werden. Beispielsweise kann vorgesehen sein, dass die leitfähige Materialphase zur Erzeugung einer Heizschicht oder nach der Phasentrennung als Heizschicht ausgebildet ist. In einem solchen Fall kann vorgesehen sein, dass wenigstens eine andere Materialphase zur Erzeugung einer Isolierschicht ausgebildet ist. Eine solche Isolierung ist insbesondere dann von Vorteil beziehungsweise erforderlich, wenn die leitfähige Materialphase elektrisch bestromt wird. Ebenso kann es vorteilhaft sein, eine solche Heizschicht vor Einflüssen von außen zu schützen, was durch eine Schutzschicht realisiert werden kann. Im Falle einer Heizeinrichtung wird das Beschichtungsprodukt, insbesondere die leitfähige Materialphase, mit elektrischen Kontakten versehen.

Gemäß einem zweiten Aspekt der Erfindung wird ein Verfahren zum Beschichten eines Substrats mit einem Beschichtungsprodukt bereitgestellt, aufweisend eine Trägerflüssigkeit und wenigstens zwei in der Trägerflüssigkeit befindliche Materialkomponenten, die als zueinander unterschiedliche Materialphasen ausgebildet sind, wobei wenigstens eine Materialphase als thermisch und/oder elektrisch leitfähige Materialphase ausgebildet ist, wenigstens eine Materialphase ein Isoliermaterial aufweist und die zueinander unterschiedlichen Materialphasen als voneinander trennbare Materialphasen ausgebildet sind, insbesondere zum Beschichten eines Substrats mit einem wie vorstehend beschriebenen erfindungsgemäßen Beschichtungsprodukt. Das Verfahren ist dadurch gekennzeichnet, dass das Beschichtungsprodukt auf dem Substrat aufgebracht wird, und dass anschließend auf das Beschichtungsprodukt eingewirkt wird derart, dass die zueinander unterschiedlichen Materialphasen voneinander getrennt werden, eine thermisch und/oder elektrisch leitfähige Schicht erzeugt wird und eine Isolierschicht erzeugt wird. Das heißt, dass nach dem Aufbringen auf das Substrat eine Phasentrennung der wenigstens zwei Materialphasen herbeigeführt wird, so dass sich nach der Phasentrennung voneinander getrennte Funktions-Materialphasen bilden, die voneinander getrennte Schichten ausbilden.

Bevorzugt werden durch die Trennung der zueinander unterschiedlichen Materialphasen Schichten mit unterschiedlichen Funktionen erzeugt. Beispiele hierzu werden im weiteren Verlauf der Beschreibung näher erläutert und sind auch im Zusammenhang mit dem erfindungsgemäßen Beschichtungsprodukt weiter oben offenbart, so dass an dieser Stelle auf die entsprechenden Offenbarungen vollinhaltlich Bezug genommen und verwiesen wird.

Dadurch lassen sich insbesondere unterschiedliche Schichten realisieren, wobei jeder Schicht eine Materialphase zugeordnet ist. Die getrennten Materialphasen, insbesondere die entstehenden Schichten können lateral oder vertikal ausgerichtet sein. Es können nur laterale, oder nur vertikale, oder Kombinationen aus lateralen und vertikalen Ausrichtungen realisiert werden.

Zu den Merkmalen, Effekten und der Funktionsweise des Verfahrens wird hinsichtlich der Offenbarung zudem auf die vorstehenden Ausführungen zum erfindungsgemäßen Beschichtungsprodukt vollinhaltlich Bezug genommen und verwiesen.

Mit der vorliegenden Erfindung ist es insbesondere möglich, eine Beschichtung auf einem Substrat zu formulieren, die, wie oben beschrieben, eine Phasentrennung nach dem Aufbringen auf dem Substrat, beispielsweise nach einer Applikation, aufweist. Nach der Phasentrennung entstehen voneinander getrennte Materialphasen, beispielsweise getrennte Schichten. Insbesondere kann eine "untere" Materialphase oder Schicht erzeugt werden, die am Substrat anhaftet und elektrisch isolierend ist. Zudem kann eine "obere" Materialphase oder Schicht erzeugt werden, die auf der "unteren" Materialphase oder Schicht liegt, und die elektrisch leitfähig ist.

Bevorzugt können in der elektrisch leitfähigen Materialphase Kohlenstoff-Nanofasern (Carbon Nanotubes - CNT) zum Einsatz kommen. Im Gegensatz zu Russ, Carbonfasern, Graphit und metallischen Partikeln, die sich entweder in der "unteren" Phase anreichern oder gleichmäßig verteilt sind, beobachtet man bei CNT, dass diese sich bevorzugt in der Phase anreichern, die sich an der Grenzfläche zur Luft befindet, hier die "obere" Phase. Damit ist es insbesondere möglich, auf elektrisch leitfähigen Substraten, wie beispielsweise Metallen oder Kohlefaserverbundstrukturen, in einem einzigen Applikationsschritt eine leitfähige Beschichtung aufzutragen, die eine elektrische Isolation zum Substrat ausbildet. Auf diese Weise lassen sich Heizbeschichtungen einfach auf elektrisch leitenden Substraten aufbringen.

Bevorzugt wird zur Trennung der Materialphasen das Beschichtungsprodukt einem Trocknungsprozess und/oder einem Aushärtungsprozess unterzogen. Das heißt, dass die Phasentrennung der wenigstens zwei Materialphasen mittels eines Trocknungsprozesses und/oder Härtungsprozesses des Beschichtungsprodukts herbeigeführt wird. Dabei ist die Erfindung nicht auf bestimmte Prozesse beschränkt. Die flüssige Phase oder der flüssige oder disperse Zustand kann auch durch Eintrag eines Härters, oder Licht oder Wärme in eine feste Phase umgewandelt werden.

Weitere Möglichkeiten zum Auslösen der Phasentrennung sind das Begasen, das Beträufeln, das Einwirken biochemischer Einflüsse, das Einwirken mechanischer Einflüsse, das Primern von Oberflächen, und dergleichen.

Bevorzugt wird über die Trennung der zueinander unterschiedlichen Materialphasen eine thermisch und/oder elektrisch leitfähige Heizschicht erzeugt.

Über die Trennung der zueinander unterschiedlichen Materialphasen wird eine Isolierschicht erzeugt, zusätzlich gegebenenfalls auch eine Schutzschicht. Die Isolierschicht kann je nach Ausgestaltung elektrisch, thermisch, mechanisch, chemisch und dergleichen isolierend sein. Die Schutzschicht kann beispielsweise zur Erhöhung der Kratzfestigkeit ausgebildet sein.

Die einzelnen getrennten Materialphasen und Schichten können neben den vorgenannten Funktionen auch noch weitere Funktionen aufweisen. Beispielhaft zu nennen sind Chemikalienbeständigkeit, Wärmeisolation, Wärmeleitfähigkeit, thermische Dehnung, chemikaliensensorische Eigenschaften (Abhängigkeit des Widerstands von der Anwesenheit bestimmter Gase oder Flüssigkeiten), thermosensorische Eigenschaften (Abhängigkeit des Widerstands von der Temperatur), mechanosensorische Eigenschaften (Abhängigkeit des Widerstands von Zug-, Druck- oder Torsionskräften), biochemische Effekte (biochemisches Milieu), Phasenänderung (res. mechanische, elektrische, chemische, biologische Effekte), optische Funktionen, Designfunktionen und dergleichen, wobei die vorliegende Erfindung nicht auf die genannten Beispiele beschränkt ist.

Als besondere Anwendungen kommen auch die simultane Applikation von Antikorrosionsschicht und Dekorschicht oder von Grundierung und Kratzfestschicht in Betracht, oder aber auch selbstreinigende, gleitfähige und selbstheilende Beschichtungen.

Beispielswiese kann vorgesehen sein, dass eine getrennte Materialphase oder Schicht als Kernfunktionsschicht ausgebildet ist. An einer der Oberflächen, möglicherweise aber auch an beiden Oberflächen können sich dann eine oder mehrere andere getrennte Materialphase(n) oder Schicht(en) absetzen.

Auf dem Beschichtungsprodukt, welches auf dem Substrat aufgebracht wurde und bei dem anschließend die Phasentrennung der Materialphasen durchgeführt wird oder wurde, können in Weiterbildung des Verfahrens weitere Schichten, beispielsweise Materialschichten aufgebracht werden, bevor das beschichtete Substrat nach außen äußeren Einflüssen ausgesetzt ist, wie beispielsweise Umwelt, Umgebung, Luft, Gasen, Flüssigkeiten, Vakuum oder anderen beliebigen Einflüssen mit beliebigen Eigenschaften.

Beispielsweise kann mittels des erfindungsgemäßen Verfahrens ein Beschichtungsprodukt auf einem Substrat aufgebracht werden, wobei das Beschichtungsprodukt nach der Phasentrennung der Materialphasen eine erste Schicht mit einer ersten Materialphasen-Funktion aufweist, die auf dem Substrat angeordnet ist. Hierbei kann es sich beispielsweise um eine Isolationsfunktion handeln. Auf dieser ersten Schicht mit erster Materialphasen-Funktion kann durch die Phasentrennung eine zweite Schicht mit einer zweiten Materialphasen-Funktion ausgebildet sein oder werden. Hierbei kann es sich beispielsweise um die Funktion der elektrischen Leitfähigkeit handeln. Je nach Ausgestaltung der einzelnen Materialphasen kann entweder die erste Schicht oder die zweite Schicht auf dem Substrat aufgebracht sein. Es ist auch möglich, dass eine der Schichten jeweils sandwichartig zwischen der jeweils anderen Schicht angeordnet ist. Auch ist denkbar, dass mehr als zwei unterschiedliche Schichten mit unterschiedlichen Materialphasen-Funktionen ausgebildet sind oder werden.

Die Reihenfolge der ausgebildeten Schichten kann prinzipiell durch geeignete Wahl des Substrates umgekehrt werden. Auch ist es möglich einen stratifizierten, das heißt abgelagerten, Film über einen Drucktransferprozess auf das gewünschte Substrat "kopfüber" zu übertragen. Die Stratifizierung kann beispielsweise stattfinden, beim Trocknen, beim Vernetzen, bei einem Schmelzvorgang, beim Auftrag, oder dergleichen.

Bevorzugt ist ferner ein wie vorstehend beschriebenes erfindungsgemäßes Beschichtungsprodukt und/oder ein wie vorstehend beschriebenes erfindungsgemäßes Verfahren, das dadurch gekennzeichnet ist, dass wenigstens eines oder mehrere in den Ansprüchen, der Beschreibung, sowie den Figuren genannte(s) Merkmal(e) vorgesehen ist.

Beispielsweise kann die vorliegende Erfindung auch eingesetzt werden bei einer Separierung in einem Spalt oder in einer Klebefuge. Zu denken ist hier beispielsweise an ein Fahrzeuglenkrad. Der Lenkradgrundkörper kann mit einem als Heizbeschichtung ausgebildeten Beschichtungsprodukt versehen werden, wobei das Beschichtungsprodukt nach der Phasentrennung verschiedene unterschiedliche Funktionsschichten entwickelt. Auf dem Beschichtungsprodukt kann dann ein Bezug, beispielsweise aus Leder, aufgebracht werden.

Je nach Ausgestaltung des Beschichtungsprodukts und/oder des Verfahrens kann vorgesehen sein, dass die Phasentrennung irreversibel oder reversibel erfolgt. Im letztgenannten Fall kann die Phasentrennung wieder rückgängig gemacht werden, beispielsweise durch einen geeigneten Wärmeeintrag, etwa durch einen Schmelzvorgang.

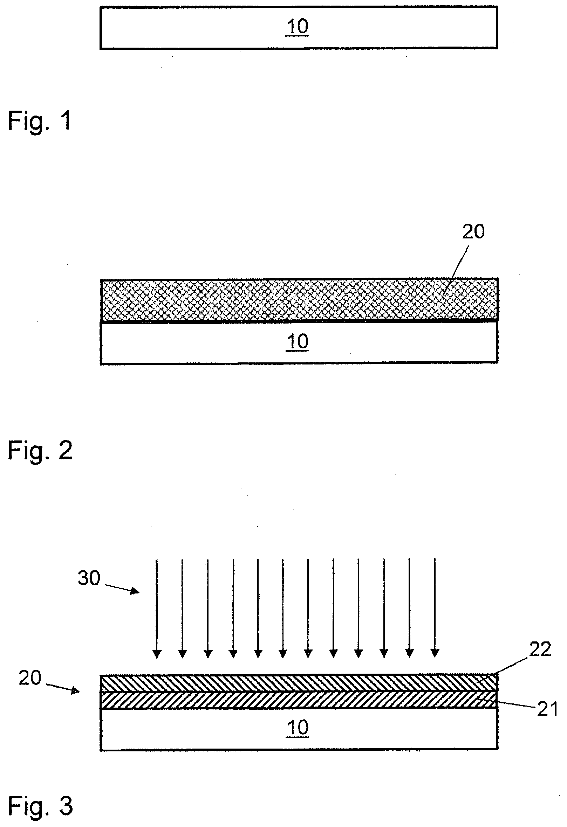

Die Erfindung wird nun anhand eines Ausführungsbeispiels unter Bezugnahme auf die beiliegenden Zeichnungen näher erläutert. Dabei zeigen die Figuren 1 bis 3 den Ablauf eines erfindungsgemäßen Verfahrens zur Beschichtung eines Substrats mit einem erfindungsgemäßen Beschichtungsprodukt.

In Figur 1 ist ein Substrat 10 dargestellt, welches mit einem Beschichtungsprodukt beschichtet werden soll. Wie in Figur 2 dargestellt, wird dazu das Beschichtungsprodukt 20 auf dem Substrat 10 aufgebracht. Beispielsweise kann es sich bei dem Beschichtungsprodukt 20 um einen Lack handeln, der auf das Substrat 10 aufgetragen wird. Das Beschichtungsprodukt weist eine Trägerflüssigkeit in Form eines Lösemittels auf, in der sich zwei Materialkomponenten befinden. Die Materialkomponenten werden durch zueinander unterschiedliche Materialphasen gebildet. Eine Materialphase ist als elektrisch leitfähige Materialphase ausgebildet, während die andere Materialphase als isolierende Materialphase ausgebildet ist. Mittels eines Trocknungsprozesses 30, der in Figur 3 dargestellt ist, wird das Beschichtungsprodukt 30 nach dem Auftrag auf das Substrat 10 getrocknet. Dadurch kommt es zu einer Trennung der Materialphasen. Es bildet sich eine erste elektrisch leitfähige Materialphase 21 und eine darüber liegende zweie isolierende Materialphase 22. Über nicht dargestellte elektrische Kontakte kann die elektrisch leitfähige Materialphase 21 mit elektrischer Energie versorgt werden. Dadurch heizt sich die elektrisch leitfähige Materialphase 21 auf, so dass das Beschichtungsprodukt 20 als Heizeinrichtung verwendet werden kann. Über die isolierende Materialphase 22 kann dann eine elektrische Isolierung nach außen erfolgen.

### Bezugszeichenliste

- 10: Substrat
- 20: Beschichtungsprodukt
- 21: Elektrisch leitfähige Materialphase
- 22: Isolierende Materialphase
- 30: Trocknungsprozess

## Patentansprüche

1. Beschichtungsprodukt (20), mit einer Trägerflüssigkeit und wenigstens zwei in der Trägerflüssigkeit befindlichen Materialkomponenten, die als zueinander unterschiedliche Materialphasen (21, 22) ausgebildet sind, wobei wenigstens eine Materialphase (21) als thermisch und/oder elektrisch leitfähige Materialphase ausgebildet ist, wenigstens eine Materialphase (22) ein Isoliermaterial aufweist und die zueinander unterschiedlichen Materialphasen (21, 22) als voneinander trennbare Materialphasen ausgebildet sind.

2. Beschichtungsprodukt nach Anspruch 1, **dadurch gekennzeichnet, dass** die Materialphasen (21, 22) als pigmentierte Materialphasen ausgebildet sind.

3. Beschichtungsprodukt nach Anspruch 1 oder 2, **dadurch gekennzeichnet, dass** das Beschichtungsprodukt (20) als Dispersion ausgebildet ist, und dass die zueinander unterschiedlichen Materialphasen (21, 22) in der Trägerflüssigkeit verteilt sind.

4. Beschichtungsprodukt nach einem der Ansprüche 1 bis 3, **dadurch gekennzeichnet, dass** die Trägerflüssigkeit als wässrige Flüssigkeit und/oder als lösemittelhaltige Flüssigkeit und/oder als Lösemittel und/oder als bindemittelhaltige Flüssigkeit und/oder als Bindemittel ausgebildet ist.

5. Beschichtungsprodukt nach einem der Ansprüche 1 bis 4, **dadurch gekennzeichnet, dass** wenigstens eine Materialphase (21, 22) als Kunststoffmaterial oder als kunststoffhaltiges Material ausgebildet ist.

6. Beschichtungsprodukt nach einem der Ansprüche 1 bis 5, **dadurch gekennzeichnet, dass** die thermisch und/oder elektrisch leitfähige Materialphase (21) ein Kohlenstoffmaterial oder kohlenstoffhaltiges Material aufweist, oder dass die thermisch und/oder elektrisch leitfähige Materialphase (21) als Kohlenstoffmaterial oder kohlenstoffhaltiges Material ausgebildet ist.

7. Beschichtungsprodukt nach einem der Ansprüche 1 bis 6, **dadurch gekennzeichnet, dass** es eine weitere Materialphase aufweist, die ein Schutzmaterial aufweist oder zur Ausbildung einer Schutzschicht ausgebildet ist.

8. Beschichtungsprodukt nach einem der Ansprüche 1 bis 7, **dadurch gekennzeichnet, dass** die wenigstens eine Materialphase (21) als thermisch und/oder elektrisch leitfähige Heizschicht ausgebildet ist.

9. Verfahren zum Beschichten eines Substrats (10) mit einem Beschichtungsprodukt (20), aufweisend eine Trägerflüssigkeit und wenigstens zwei in der Trägerflüssigkeit befindliche Materialkomponenten, die als zueinander unterschiedliche Materialphasen (21, 22) ausgebildet sind, wobei wenigstens eine Materialphase (21) als thermisch und/oder elektrisch leitfähige Materialphase ausgebildet ist, wenigstens eine Materialphase (22) ein Isoliermaterial aufweist und die zueinander unterschiedlichen Materialphasen (21, 22) als voneinander trennbare Materialphasen ausgebildet sind,
**dadurch gekennzeichnet, dass** das Beschichtungsprodukt (20) auf dem Substrat (10) aufgebracht wird und dass anschließend auf das Beschichtungsprodukt (20) eingewirkt wird derart, dass die zueinander unterschiedlichen Materialphasen (21, 22) voneinander getrennt werden, eine thermisch und/oder elektrisch leitfähige Schicht erzeugt wird und eine Isolierschicht erzeugt wird.

10. Verfahren nach Anspruch 9, **dadurch gekennzeichnet, dass** zur Trennung der Materialphasen (21, 22) das Beschichtungsprodukt (20) einem Trocknungsprozess (30) und/oder einem Aushärtungsprozess unterzogen wird.

11. Verfahren nach Anspruch 9 oder 10, **dadurch gekennzeichnet, dass** über die Trennung der zueinander unterschiedlichen Materialphasen (21, 22) eine thermisch und/oder elektrisch leitfähige Heizschicht erzeugt wird.

12. Verfahren nach einem der Ansprüche 9 bis 11, **dadurch gekennzeichnet, dass** das Beschichtungsprodukt eine weitere Materialphase aufweist, die ein Schutzmaterial aufweist, und dass über die Trennung der zueinander unterschiedlichen Materialphasen eine Schutzschicht erzeugt wird.

## Claims

1. A coating product (20) comprising a carrier fluid and at least two material components which are present in the carrier fluid and which are configured as material phases (21, 22) which are different from each other, wherein at least one material phase (21) is configured as thermally and/or electrically conductive material phase, at least one material phase (22) comprises an insulating material, and the material phases (21, 22) which are different from each other are configured as material phases which can be separated from each other.

2. The coating product of claim 1, **characterized in that** the material phases (21, 22) are configured as pigmented material phases.

3. The coating product of claim 1 or 2, **characterized in that** the coating product (20) is configured as dispersion and that the material phases (21, 22) which are different from each other are dispersed in the carrier fluid.

4. The coating product of any one of claims 1 to 3, **characterized in that** the carrier fluid is configured as aqueous fluid and/or as solvent-based fluid and/or as solvent and/or as binder-containing fluid and/or as binder.

5. The coating product of any one of claims 1 to 4, **characterized in that** at least one material phase (21, 22) is configured as plastic Material or as plastic-containing material.

6. The coating product of any one of claims 1 to 5, **characterized in that** the thermally and/or electrically conductive material phase (21) comprises a carbon material or carbonaceous material or that the thermally and/or electrically conductive material phase (21) is configured as carbon material or carbonaceous material.

7. The coating product of any one of claims 1 to 6, **characterized in that** it comprises a further material phase which comprises a protecting material or which is configured to form a protecting layer.

8. The coating product of any one of claims 1 to 7, **characterized in that** the at least one material phase (21) is configured as thermally and/or electrically conductive heating layer.

9. A method for coating a substrate (10) with a coating product (20) comprising a carrier fluid and at least two material components which are present in the carrier fluid and which are configured as material phases (21, 22) which are different from each other, wherein at least one material phase (21) is configured as thermally and/or electrically conductive material phase, at least one material phase (22) comprises an insulating material, and the material phases (21, 22) which are different from each other are configured as material phases that can be separated from each other,
**characterized in that** the coating product (20) is applied on the substrate (10) and that, subsequently, the coating product (20) is acted upon in such a manner that the material phases (21, 22) which are different from each other are separated from each other, a thermally and/or electrically conductive layer is generated and an insulating layer is generated.

10. The method of claim 9, **characterized in that** for separating the material phases (21, 22) the coating product (20) is subjected to a drying process (30) and/or a curing process.

11. The method of claim 9 or 10, **characterized in that**, via the separation of the material phases (21, 22) which are different from each other, a thermally and/or electrically conductive heating layer is generated.

12. The method of any one of claims 9 to 11, **characterized in that** the coating product comprises a further material phase comprising a protecting material and that, via the separation of the material phases which are different from each other, a protecting layer is generated.

## Revendications

1. Produit de revêtement (20), avec un fluide support et au moins deux composants de matières se trouvant dans le fluide support, qui sont sous la forme de deux phases de matières séparées l'une de l'autre (21, 22), tandis qu'au moins une phase de matière (21) est sous la forme d'une phase de matière conductrice de la chaleur et/ou de l'électricité, au moins une phase de matière (22) présente une matière isolante et les autres phases de matières différentes l'une de l'autre (21, 22) sont sous la forme de phases de matières séparables l'une de l'autre.

2. Produit de revêtement selon la revendication 1, **caractérisé en ce que** les phases de matières (21, 22) sont sous la forme de phases de matières pigmentées.

3. Produit de revêtement selon la revendication 1 ou 2, **caractérisé en ce que** le produit de revêtement (20) est constitué d'une dispersion, et que les phases de matières différentes entre elles (21, 22) sont réparties dans le fluide support.

4. Produit de revêtement selon l'une des revendications 1 à 3, **caractérisé en ce que** le fluide support est constitué d'un fluide aqueux et/ou d'un fluide contenant un solvant et/ou d'un solvant et/ou d'un fluide contenant un liant et/ou d'un liant.

5. Produit de revêtement selon l'une des revendications 1 à 4, **caractérisé en ce qu'**au moins une phase de matières (21, 22) est constituée d'une matière synthétique ou d'une matière contenant une matière synthétique.

6. Produit de revêtement selon l'une des revendications 1 à 5, **caractérisé en ce que** la phase de matière conductrice de la chaleur et/ou de l'électricité (21) comprend une matière carbonée ou une matière contenant du carbone, ou que la phase de matière conductrice de la chaleur et/ou de l'électricité (21) est sous la forme d'une matière carbonée ou d'une matière contenant du carbone.

7. Produit de revêtement selon l'une des revendications 1 à 6, **caractérisé en ce qu'**il comporte une autre phase de matière qui comporte une matière protectrice ou qui est sous une forme pour l'élaboration d'une couche protectrice.

8. Produit de revêtement selon l'une des revendications 1 à 7, **caractérisé en ce que** la au moins une phase de matières (21) est formée d'une couche chauffante conductrice de la chaleur et/ou de l'électricité.

9. Procédé pour l'enduction d'un substrat (10) avec un produit d'enduction (20), présentant un fluide support et au moins deux composants de la matière se trouvant dans le fluide support, qui sont sous la forme de deux phases de matières différentes l'une de l'autre (21, 22), tandis qu'au moins une phase de matières (21) est sous la forme d'une phase de matière conductrice de la chaleur et/ou de l'électricité, au moins une phase de matières (22) comporte au moins une matière isolante et les deux phases de matières (21, 22) différentes l'une de l'autre sont sous la forme de phases de matières pouvant être séparées l'une de l'autre,
**caractérisé en ce que** le produit de revêtement (20) est appliqué sur le substrat (10) et est ensuite laissé agir sur le produit de revêtement (20) de telle manière que les deux phases de matières différentes l'une de l'autre (21, 22) sont séparées l'une de l'autre, une couche conductrice de la chaleur et/ou de l'électricité est formée, et une couche isolante est formée.

10. Procédé selon la revendication 9, **caractérisé en ce que** pour séparer les phases de matières (21, 22) le produit d'enduction (20) est soumis à un processus de séchage (30) et/ou à un processus de durcissement.

11. Procédé selon la revendication 9 ou 10, **caractérisé en ce que**, par l'intermédiaire de la séparation des phases de matières différentes l'une de l'autre (21, 22) on produit une couche conductrice de la chaleur et/ou de l'électricité.

12. Procédé selon l'une des revendications 9 à 11, **caractérisé en ce que** le produit d'enduction comporte une autre phase de matière qui présente une matière protectrice, et qu'on produit une couche protectrice par l'intermédiaire de la séparation des phases de matières différentes l'une de l'autre.
